# FASCICULE DE BREVET EUROPEEN

(11) **EP 4 396 266 B1**
(45) Date de publication et mention de la délivrance du brevet: **03.09.2025**
(21) Numéro de dépôt: 22785760.4
(22) Date de dépôt: 30.08.2022
(51) Int. Cl.: C08G 77/12, C08G 77/20, C08L 83/04, C07F 9/58, C07F 15/06

(54) **PROCÉDÉ D'HYDROSILYLATION CATALYSÉ PAR UN COMPLEXE DE COBAIT**
KOBALTVERBINDUNGKATALYSIERTE HYDROSILYLIERUNGSVERFAHREN
HYDROSILYLATION PROCESS CATALYSED BY A COBALT COMPLEX

(30) Priorité: 31.08.2021 FR 2109057
(43) Date de publication de la demande: 10.07.2024
(73) Titulaire: Elkem Silicones France SAS, 69003 Lyon (FR); CPE Lyon, 69100 Villeurbanne (FR); Centre National de la Recherche Scientifique, 75016 Paris (FR); Université Claude Bernard Lyon 1, 69100 Villeurbanne (FR)
(72) Inventeur: DELORME, James, 69100 VILLEURBANNE (FR); MIRGALET, Raphael, 69008 LYON (FR); BLANC, Delphine, 69007 LYON (FR); MONTEIL, Vincent, 69008 LYON (FR); RAYNAUD, Jean, 69100 VILLEURBANNE (FR); PUILLET, Magali, 69008 LYON (FR)
(74) Mandataire: Menville, Laure
(86) Numéro de dépôt international: PCT/FR2022/000077
(87) Numéro de publication internationale: WO 2023/031525

(56) Documents cités:
- WO-A1-2005/028544
- WO-A1-2018/115601
- WO-A2-2016/099727

## Description

### Domaine technique

La présente invention concerne les réactions d'hydrosilylation entre un composé alcène ou alcyne et un composé comprenant au moins un atome d'hydrogène lié à un atome de silicium. Plus spécifiquement, l'invention concerne l'utilisation d'un nouveau type de catalyseurs pour ces réactions. Ces catalyseurs permettent notamment le durcissement par réticulation de compositions silicones.

### Etat de la technique antérieure

Lors d'une réaction d'hydrosilylation (également appelée polyaddition), un composé insaturé, c'est-à-dire comprenant au moins une insaturation de type double ou triple liaison réagit avec un composé comprenant au moins une fonction hydrogénosilyle, c'est-à-dire un atome d'hydrogène lié à un atome de silicium. Cette réaction peut par exemple être décrite dans le cas d'une insaturation de type alcène par : 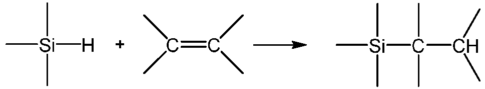 ou encore dans le cas d'une insaturation de type alcyne par :

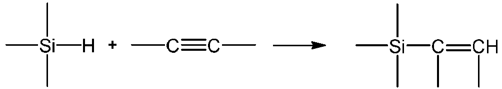

La réaction d'hydrosilylation peut s'accompagner de, voire parfois être remplacée par, une réaction de silylation déshydrogénante. La réaction peut être décrite par :

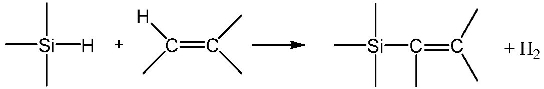

La réaction d'hydrosilylation est notamment utilisée pour réticuler des compositions silicones comprenant des organopolysiloxanes portant des motifs alcényle ou alcynyle et des organopolysiloxanes comprenant des fonctions hydrogénosilyle.

La réaction d'hydrosilylation de composés insaturés est typiquement réalisée par catalyse, à l'aide de catalyseurs métalliques ou organométalliques. Actuellement, le catalyseur approprié pour cette réaction est un catalyseur au platine. Ainsi, la plupart des procédés industriels d'hydrosilylation, en particulier d'alcènes, sont catalysées par l'acide hexachloroplatinique de Speier ou par le complexe de Pt(0) de Karstedt de formule générale Pt₂(divinyltétraméthyldisiloxane)₃ (ou en abrégé Pt₂(DVTMS)₃).

Au début des années 2000, la préparation de complexes de platine-carbène a permis d'avoir accès à des catalyseurs plus stables (voir par exemple la demande de brevet WO 01/42258).

Toutefois, l'utilisation de catalyseurs métalliques ou organométalliques au platine est toujours problématique. Il s'agit d'un métal cher et en voie de raréfaction et dont le coût fluctue énormément. Son utilisation à l'échelle industrielle est donc difficile. On souhaite donc diminuer autant que possible la quantité de catalyseur nécessaire à la réaction, sans pour autant diminuer le rendement et la vitesse de la réaction. De nombreuses études ont été réalisées pour trouver des alternatives au catalyseur de Karstedt.

Dans ce contexte, des travaux ont été menés depuis des années pour trouver de nouveaux catalyseurs pour effectuer l'hydrosilylation d'alcènes.

Dans la demande internationale de brevet WO 2018/115601, l'utilisation de nouveaux catalyseurs à base de cobalt comme catalyseur d'hydrosilylation et/ou de silylation déshydrogénante a été décrite. Ces nouveaux catalyseurs sont décrits par la formule générale [Co(N(SiR₃)₂)ₓ]_{y} dans laquelle les symboles R, identiques ou différents, représentent un atome d'hydrogène ou un radical hydrocarboné ayant de 1 à 12 atomes de carbone, x vaut 1, 2 ou 3 et y vaut 1 ou 2. Les inventeurs ont démontré que ces nouveaux catalyseurs pouvaient catalyser efficacement des réactions d'hydrosilylation et ou de silylation déshydrogénante, avantageusement sans solvants car ils présentent une bonne solubilité dans les huiles silicones. Toutefois, ces composés ont été préparés et manipulés à l'abris de l'air et de l'eau. Le procédé d'hydrosilylation et/ou de silylation déshydrogénante est mis en œuvre sous atmosphère inerte en boîte à gants. Les exemples ont tous été réalisés, sous atmosphère inerte, en boîte à gants et/ou dans un pilulier fermé.

De façon similaire, des catalyseurs au cobalt ont été décrits dans la publication scientifique de Yang Liu and Liang Deng, « Mode of Activation of Cobalt(II) Amides for Catalytic Hydrosilylation of Alkenes with Tertiary Silanes » (J. Am. Chem. Soc. 2017, 139, 1798-180). Les réactions ont été réalisées en conditions anhydres strictes, sous atmosphère inerte d'azote sec, notamment en boite à gants. Les solvants ont été séchés et dégazés avant utilisation (voir même publication, Supporting Information).

Il existe donc un préjugé technique selon lequel les catalyseurs décrits dans l'art antérieur doivent être produits, stockés et utilisés dans conditions anhydres, à l'abri de l'air et de l'eau. De plus, les autres réactifs et les éventuels solvants doivent être séchés avant utilisation. D'un point de vue industriel, il est difficile et coûteux de respecter de telles conditions.

Par ailleurs, d'autres documents décrivant des catalyseurs d'hydrosilylation peuvent être mentionnés. La demande internationale de brevet WO 2016/099727 décrit des catalyseurs d'hydrosilylation à base de fer, de cobalt, de manganèse, de nickel ou de ruthénium qui se caractérisent par la mise en œuvre d'un ligand spécifique de formule R¹₂P-X-N=C(R²)-Y. La demande internationale de brevet WO 2005/028544 décrit une composition catalytique hétérogène comprenant au moins un métal choisi parmi le cobalt, le rhodium, le ruthénium, le platine et le nickel et qui est déposé sur un support inerte, caractérisé en ce que l'hydrosilylation est effectuée en présence d'au moins une base non nucléophile inorganique et éventuellement d'eau.

### Résumé de l'invention

Contre toute attente, les inventeurs ont découvert que les catalyseurs au cobalt décrits précédemment pouvaient avantageusement être utilisés en présence d'eau, d'alcool ou de silanol.

La présente invention a donc pour objet un procédé d'hydrosilylation d'un composé insaturé (A) comprenant au moins une fonction choisie parmi une fonction alcène et une fonction alcyne, avec un composé (B) comprenant au moins une fonction hydrogénosilyle, ledit procédé comprenant l'étape consistant à mettre en présence ledit composé insaturé (A), ledit composé (B), un composé du cobalt (C) de formule (1) :

[Co(N(SiR₃)₂)ₓ]_{y} (1)

dans laquelle :
- les symboles R, identiques ou différents, représentent un atome d'hydrogène ou un radical hydrocarboné ayant de 1 à 12 atomes de carbone,
- x = 1, 2 ou 3, et
- y = 1 ou 2 ;
   un composé (D) de formule (2) suivante : 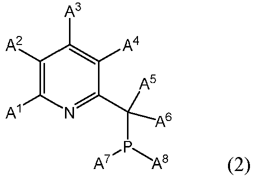
   dans laquelle :
      - A¹, A², A³ et A⁴ sont choisis, indépendamment les uns des autres, parmi l'atome d'hydrogène, les groupes alkyles ayant de 1 à 8 atomes de carbone, les groupes cycloalkyles ayant de 6 à 12 atomes de carbone, les groupes aryles ayant de 6 à 12 atomes de carbone, les groupes aryl-alkyles ayant de 7 à 24 atomes de carbone, les halogènes et les groupes alkoxy de formule OA⁹ où A⁹ est un groupe alkyle ayant de 1 à 8 atomes de carbone.
      - A⁵ et A⁶ sont choisis, indépendamment l'un de l'autre, parmi l'atome d'hydrogène, les groupes alkyle ayant de 1 à 8 atomes de carbone, les groupes cycloalkyles ayant de 6 à 12 atomes de carbone, les groupes aryles ayant de 6 à 12 atomes de carbone et les groupes aryl-alkyles ayant de 7 à 24 atomes de carbone, et
      - A⁷ et A⁸ sont choisis, indépendamment l'un de l'autre, parmi les groupes alkyles ayant de 1 à 8 atomes de carbone, les groupes cycloalkyles ayant de 6 à 12 atomes de carbone, les groupes aryles ayant de 6 à 12 atomes de carbone, les groupes aryl-alkyles ayant de 7 à 24 atomes de carbone et les groupes alkoxy de formule OA¹⁰ où A¹⁰ est un groupe alkyle ayant de 1 à 8 atomes de carbone,
   et un composé (E) de formule (3) suivante :

      R'-OH (3)
   dans laquelle R' représente l'atome d'hydrogène ou bien R' est choisi dans le groupe constitué par les groupes alkyle ayant de 1 à 8 atomes de carbone, les groupes cycloalkyles ayant de 6 à 12 atomes de carbone, les groupes aryles ayant de 6 à 12 atomes de carbone, les groupes aryl-alkyles ayant de 7 à 24 atomes de carbone, et les groupes silyles de formule Si(A¹¹)₃ où chaque A¹¹ est choisi, indépendamment les uns des autres, parmi les groupes alkyles ayant de 1 à 8 atomes de carbone.

Par ailleurs, la présente invention a également pour objet une composition comprenant au moins un composé insaturé (A) comprenant au moins une fonction choisie parmi une fonction alcène et une fonction alcyne, au moins un composé (B) comprenant au moins une fonction hydrogénosilyle, un composé du cobalt (C) de formule (1) :

[Co(N(SiR₃)₂)ₓ]_{y} (1)

dans laquelle :
- les symboles R, identiques ou différents, représentent un atome d'hydrogène ou un radical hydrocarboné ayant de 1 à 12 atomes de carbone,
- x = 1, 2 ou 3, et
- y = 1 ou 2 ;
   un composé (D) de formule (2) suivante : 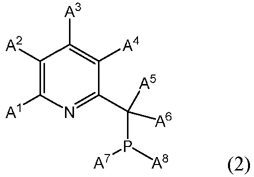
   dans laquelle :
      - A¹, A², A³ et A⁴ sont choisis, indépendamment les uns des autres, parmi l'atome d'hydrogène, les groupes alkyles ayant de 1 à 8 atomes de carbone, les groupes cycloalkyles ayant de 6 à 12 atomes de carbone, les groupes aryles ayant de 6 à 12 atomes de carbone, les groupes aryl-alkyles ayant de 7 à 24 atomes de carbone, les halogènes et les groupes alkoxy de formule OA⁹ où A⁹ est un groupe alkyle ayant de 1 à 8 atomes de carbone.
      - A⁵ et A⁶ sont choisis, indépendamment l'un de l'autre, parmi l'atome d'hydrogène, les groupes alkyle ayant de 1 à 8 atomes de carbone, les groupes cycloalkyles ayant de 6 à 12 atomes de carbone, les groupes aryles ayant de 6 à 12 atomes de carbone et les groupes aryl-alkyles ayant de 7 à 24 atomes de carbone, et
      - A⁷ et A⁸ sont choisis, indépendamment l'un de l'autre, parmi les groupes alkyles ayant de 1 à 8 atomes de carbone, les groupes cycloalkyles ayant de 6 à 12 atomes de carbone, les groupes aryles ayant de 6 à 12 atomes de carbone, les groupes aryl-alkyles ayant de 7 à 24 atomes de carbone et les groupes alkoxy de formule OA¹⁰ où A¹⁰ est un groupe alkyle ayant de 1 à 8 atomes de carbone,
   et un composé (E) de formule (3) suivante :

      R'-OH (3)
   dans laquelle R' représente l'atome d'hydrogène ou bien R' est choisi dans le groupe constitué par les groupes alkyle ayant de 1 à 8 atomes de carbone, les groupes cycloalkyles ayant de 6 à 12 atomes de carbone, les groupes aryles ayant de 6 à 12 atomes de carbone, les groupes aryl-alkyles ayant de 7 à 24 atomes de carbone, et les groupes silyles de formule Si(A¹¹)₃ où chaque A¹¹ est choisi, indépendamment les uns des autres, parmi les groupes alkyles ayant de 1 à 8 atomes de carbone.

### Description détaillée de l'invention

Dans le présent texte, le symbole « ↗» représente une liaison covalente de coordination due à la présence dans le ligand d'une paire libre d'électrons.

Dans le présent texte, selon les notations usuelles du domaine technique, le symbole « N » représente l'atome d'azote, le symbole « Co » représente l'atome de cobalt, le symbole « H » représente l'atome d'hydrogène, le symbole « P » représente l'atome de phosphore.

Sauf indication contraire, toutes les viscosités des huiles silicones dont il est question dans le présent exposé correspondent à une grandeur de viscosité dynamique à 25°C dite « Newtonienne », c'est-à-dire la viscosité dynamique qui est mesurée, de manière connue en soi, avec un viscosimètre Brookfield à un gradient de vitesse de cisaillement suffisamment faible pour que la viscosité mesurée soit indépendante du gradient de vitesse.

Bien que non dessinées, les formes tautomères éventuelles des composés décrits dans le présent exposé sont incluses dans la portée de la présente invention.

Dans la présente invention, un groupe alkyle peut être linéaire ou ramifié. Un groupe alkyle comprend de préférence entre 1 et 30 atomes de carbone, plus préférentiellement entre 1 et 12 atomes de carbone, encore plus préférentiellement entre 1 et 6 atomes de carbone. Un groupe alkyle peut par exemple être choisi parmi les groupes suivants : méthyle, éthyle, n-propyle, isopropyle, n-butyle, isobutyle, s-butyle, t-butyle, n-pentyle, n-hexyle, n-heptle, n-octyle, n-nonyle, n-decyle, n-undecyle et n-dodecyle.

Dans la présente invention, un groupe cycloalkyle peut être monocyclique ou polycyclique, de préférence monocyclique ou bicyclique. Un groupe cycloalkyle comprend de préférence entre 3 et 30 atomes de carbone, plus préférentiellement entre 3 et 8 atomes de carbone. Un groupe cycloalkyle peut par exemple être choisi parmi les groupes suivants : cyclopropyle, cyclobutyle, cyclopentyle, cyclohexyle, cycloheptyle, cyclooctyle, adamantane et norborane.

Dans la présente invention, un groupe aryle peut être monocyclique ou polycyclique, de préférence monocyclique, et comprend de préférence entre 6 et 30 atomes de carbone, plus préférentiellement entre 6 et 18 atomes de carbone. Un groupe aryle peut être non-substitué ou être substitué une ou plusieurs fois par un groupe alkyle. Le groupe aryle peut être choisi parmi les groupes phényle, naphtyle, anthracényle, phénanthryle, mésityle, tolyle, xylyle, diisoproylphényl et triisopropylphényl.

Dans la présente invention, un groupe aryle-alkyle comprend de préférence entre 6 et 30 atomes de carbone, plus préférentiellement entre 7 et 20 atomes de carbone. Un groupe aryl-alkyle peut par exemple être choisi parmi les groupes suivants : benzyle, phényléthyle, phénylpropyle, naphylméthyle, naphtyléthyle et naphtylpropyle.

Dans la présente invention, l'atome d'halogène peut par exemple être choisi dans le groupe constitué par le fluor, le brome, le chlore et l'iode, le fluor étant préféré. Un groupe alkyle substitué par le fluor peut par exemple être le trifluoropropyle.

La présente invention a pour objet un nouveau procédé d'hydrosilylation entre un composé insaturé (A) et un composé (B) comprenant au moins une fonction hydrogénosilyle catalysé par un composé du cobalt (C) en présence d'un composé (D) et d'un composé (E) comme décrit ci-dessous.

La réaction d'hydrosilylation peut s'accompagner d'une réaction de silylation déshydrogénante. Le composé du cobalt (C) en présence d'un composé (D) et d'un composé (E) tels que décrits ci-dessous peut avantageusement être utilisé également comme catalyseur de la réaction de silylation déshydrogénante entre un composé insaturé (A) comprenant au moins une fonction choisie parmi une fonction alcène et une fonction alcyne, et un composé (B) comprenant au moins une fonction hydrogénosilyle. Dans le présent texte, et sauf indication contraire, tout commentaire ou exposé concernant la réaction d'hydrosilylation s'applique à la réaction de silylation déshydrogénante.

Le composé du cobalt (C) est représenté par la formule (1) :

[Co(N(SiR₃)₂)ₓ]_{y} (1)

dans laquelle :
- les symboles R, identiques ou différents, représentent un atome d'hydrogène ou un radical hydrocarboné ayant de 1 à 12 atomes de carbone,
- x = 1, 2 ou 3, et
- y = 1 ou 2.

De préférence, les symboles R, identiques ou différents, sont choisis dans le groupe constitué par l'atome d'hydrogène, les groupes alkyles ayant de 1 à 8 atomes de carbone, les groupes cycloalkyles ayant de 3 à 8 atomes de carbone, les groupes aryles ayant de 6 à 12 atomes de carbone et les groupes aryl-alkyles ayant 7 à 24 atomes de carbone. De façon plus préférée, les symboles R, identiques ou différents, sont choisis dans le groupe constitué par les groupes méthyle, éthyle, propyle, xylyle, tolyle et phényle. De façon encore plus préférée, les groupes R sont des méthyles.

Dans cette formule (1), le cobalt peut être au degré d'oxydation +I, +Il ou +III.

Selon un mode de réalisation préféré, x = 2. Le composé de cobalt (C) a alors pour formule [Co(N(SiR₃)₂)₂]_{y}, R et y étant comme définis ci-avant. Le cobalt est alors au degré d'oxydation +II.

Selon un mode de réalisation très préféré, le composé de cobalt (C) est représenté par la formule suivante :

[Co(N(Si(CH₃)₃)₂)₂]_{y}

dans laquelle y vaut 1 ou 2.

Le composé de cobalt (C) peut être obtenu dans le commerce ou préparé selon toute méthode connue de l'homme du métier ou décrites dans la littérature. Selon un mode de réalisation, la préparation du composé du cobalt (C) [Co(N(Si(CH₃)₃)₂)₂]_{y} peut être réalisée en faisant réagir un halogénure de cobalt, par exemple du chlorure de cobalt CoCl₂, avec du bis(triméthylsilyl)amide de lithium LiN(SiMe₃)₂. La synthèse peut être effectuée préalablement à la réaction d'hydrosilylation, ou bien le composé du cobalt (C) peut être synthétisé in-situ, en présence du composé insaturé (A).

La concentration molaire en élément cobalt apporté par le composé du cobalt (C) peut être de 0,01 mol.% à 15 mol.%, plus préférentiellement de 0,05 mol.% à 10 mol.%, encore plus préférentiellement de 0,1 mol.% à 8 mol.%, par rapport au nombre de moles total d'insaturations portées par le composé insaturé (A). Selon une autre variante, la quantité de cobalt mise en œuvre dans le procédé selon l'invention est comprise entre 10 ppm et 3000 ppm, plus préférentiellement entre 20 ppm et 2000 ppm, et encore plus préférentiellement entre 20 ppm et 1000 ppm, en poids par rapport au poids total des composés (A), (B), (C), (D) et (E), sans tenir compte de la présence éventuelle de solvant. Selon une variante préférée, dans le procédé selon l'invention, on ne met pas en œuvre de composés à base de platine, palladium, ruthénium ou rhodium. La quantité de composés à base de platine, palladium, ruthénium ou rhodium dans le milieu réactionnel est, par exemple, inférieure à 0,1% en poids par rapport au poids du composé de cobalt (C), de préférence inférieure à 0,01% en poids, et plus préférentiellement inférieure à 0,001% en poids.

Le composé (D) selon la présente invention est représenté par la formule (2) suivante : 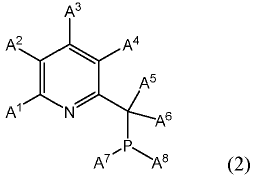 dans laquelle :
- A¹, A², A³ et A⁴ sont choisis, indépendamment les uns des autres, parmi l'atome d'hydrogène, les groupes alkyles ayant de 1 à 8 atomes de carbone, les groupes cycloalkyles ayant de 6 à 12 atomes de carbone, les groupes aryles ayant de 6 à 12 atomes de carbone, les groupes aryl-alkyles ayant de 7 à 24 atomes de carbone, les halogènes et les groupes alkoxy de formule OA⁹ où A⁹ est un groupe alkyle ayant de 1 à 8 atomes de carbone.
- A⁵ et A⁶ sont choisis, indépendamment l'un de l'autre, parmi l'atome d'hydrogène, les groupes alkyle ayant de 1 à 8 atomes de carbone, les groupes cycloalkyles ayant de 6 à 12 atomes de carbone, les groupes aryles ayant de 6 à 12 atomes de carbone et les groupes aryl-alkyles ayant de 7 à 24 atomes de carbone, et
- A⁷ et A⁸ sont choisis, indépendamment l'un de l'autre, parmi les groupes alkyles ayant de 1 à 8 atomes de carbone, les groupes cycloalkyles ayant de 6 à 12 atomes de carbone, les groupes aryles ayant de 6 à 12 atomes de carbone, les groupes aryl-alkyles ayant de 7 à 24 atomes de carbone et les groupes alkoxy de formule OA¹⁰ où A¹⁰ est un groupe alkyle ayant de 1 à 8 atomes de carbone.

De préférence, dans la formule (2) ci-dessus :
- A¹, A², A³ et A⁴ sont des atomes d'hydrogène,
- A⁵ et A⁶ sont des atomes d'hydrogène,
- A⁷ et A⁸ sont choisis parmi les groupes alkyles ayant de 1 à 8 atomes de carbone, les groupes cycloalkyles ayant de 6 à 12 atomes de carbone, les groupes aryles ayant de 6 à 12 atomes de carbone, les groupes aryl-alkyles ayant de 7 à 24 atomes de carbone et les groupes alkoxy de formule OA¹⁰ où A¹⁰ est un groupe alkyle ayant de 1 à 8 atomes de carbone ; et de préférence A⁷ et A⁸ sont choisis parmi les groupes t-butyle, isopropyle, méthyle, éthyle, phényle et cyclohexyle.

Encore plus préférentiellement, le composé (D) est choisi parmi les composés de formule (4) à (9) suivants :

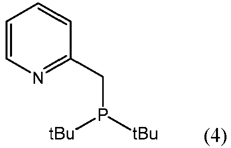

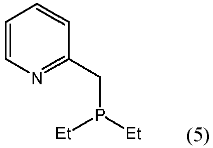

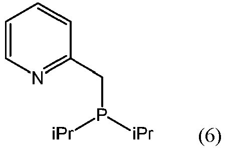

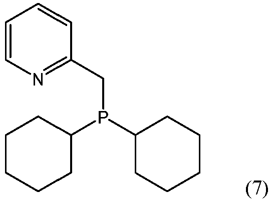

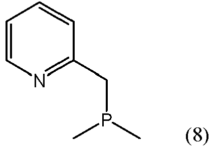

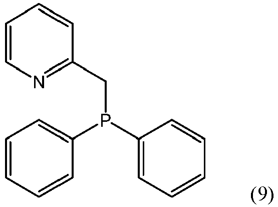

Sans vouloir être liés par une quelconque théorie, le composé (C) et le composé (D) peuvent réagir, en partie ou en totalité, pour former un complexe. Le composé (D) peut alors jouer le rôle de ligand qui peut coordonner le cobalt par une paire libre d'électrons portée par l'atome d'azote ou par l'atome de phosphore ou par les deux. Ainsi, il est possible d'obtenir un complexe de cobalt (C') représenté par la formule (10) suivante : 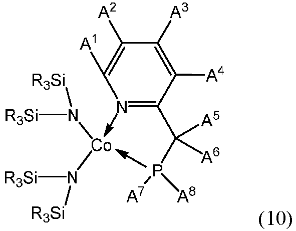 dans laquelle R, A¹, A², A³, A⁴, A⁵, A⁶, A⁷ et A⁸ ont les signification décrites ci-dessus.

Le complexe (C') peut avantageusement catalyser la réaction d'hydrosilylation entre un composé insaturé (A) et un composé (B) comprenant au moins une fonction hydrogénosilyle.

Selon un premier mode de réalisation, les composés (C) et (D) peuvent être mélangés préalablement à la réaction d'hydrosilylation, et le complexe (C') peut être éventuellement séparé et purifié avant d'être mis en œuvre dans la réaction d'hydrosilylation entre le composé (A) et le composé (B).

Selon un second mode de réalisation, le composé (D) peut être introduit dans le milieu réactionnel avec les réactifs (A) et (B) et le composé (C). La complexation est alors possible in-situ, lors de la réaction d'hydrosilylation.

Lors de la mise en œuvre du procédé d'hydrosilylation selon la présent invention, le ratio molaire entre le composé (D) et l'élément cobalt apporté par le composé (C) peut être compris entre 0,5 et 4, de préférence entre 0,8 et 3,5 et encore plus préférentiellement entre 1,5 et 3.

Le procédé d'hydrosilylation selon la présente invention est réalisé en présence d'un composé (E) comme décrit ci-dessous de formule (3) suivante :

R'-OH (3)

dans laquelle R' représente l'atome d'hydrogène ou bien R' est choisi dans le groupe constitué par les groupes alkyle ayant de 1 à 8 atomes de carbone, les groupes cycloalkyles ayant de 6 à 12 atomes de carbone, les groupes aryles ayant de 6 à 12 atomes de carbone, les groupes aryl-alkyles ayant de 7 à 24 atomes de carbone, et les groupes silyles de formule Si(A¹¹)₃ où chaque A¹¹ est choisi, indépendamment les uns des autres, parmi les groupes alkyles ayant de 1 à 8 atomes de carbone.

Selon un premier mode de réalisation, R' représente l'atome d'hydrogène. Le composé (E) est alors l'eau.

De façon tout à fait surprenante, il a été mis en évidence que la réaction d'hydrosilylation avec les catalyseurs au cobalt décrits précédemment pouvait être réalisée en présence d'eau. L'ajout d'une quantité contrôlée d'eau permet même d'atteindre de meilleures performances en termes de taux de conversion et de sélectivité de la réaction.

Par ailleurs, il a été constaté que l'eau pouvait être remplacée par des alcools ou des silanols. Selon un second mode de réalisation, R' représente un groupe choisi parmi les groupes alkyle ayant de 1 à 8 atomes de carbone, les groupes cycloalkyles ayant de 6 à 12 atomes de carbone, les groupes aryles ayant de 6 à 12 atomes de carbone, les groupes aryl-alkyles ayant de 7 à 24 atomes de carbone, et les groupes silyles de formule Si(A¹¹)₃ où chaque A¹¹ est choisi, indépendamment les uns des autres, parmi les groupes alkyles ayant de 1 à 8 atomes de carbone. De préférence, R' peut être choisi dans le groupe constitué par méthyle, éthyle, isopropyle, t-butyle, phényle, benzyle, triméthylsilyle, triéthylsilyle, triisopropylsilyl et tri-t-butyl-silyle.

Lors de la réaction d'hydrosilylation selon la présente invention, le composé (E) est présent selon un ratio molaire (composé (E))/(élément Co apporté par le composé du cobalt (C)) compris de préférence entre 0,1 et 500, plus préférentiellement entre 0,5 et 100. Ce ratio peut être adapté selon la nature des composés (A) et (B).

Selon un premier mode de réalisation, le composé insaturé (A) n'est pas un organopolysiloxane. Le composé insaturé (A) est de préférence choisi parmi les composés hydrocarbonés comprenant de 2 à 40 atomes de carbone, plus préférentiellement de 2 à 12 atomes de carbone, comprenant une ou plusieurs insaturations alcène ou alcyne ne faisant pas partie d'un cycle aromatique, éventuellement substitué une ou plusieurs fois par un atome d'halogène, et dans lequel un ou plusieurs atomes de carbone peuvent éventuellement être substitués par un hétéroatome, typiquement un atome d'oxygène, un atome d'azote ou un atome de silicium. Selon ce premier mode de réalisation, le composé (E) est de préférence présent selon un ratio molaire (composé (E))/(élément Co apporté par le composé du cobalt (C)) compris entre 0,1 et 100, de préférence entre 0,1 et 50, de façon encore plus préférée entre 0,5 et 15.

Selon un second mode de réalisation, le composé insaturé (A) peut être un composé organopolysiloxane comprenant une ou plusieurs fonctions alcènes, de préférence au moins deux fonctions alcènes. Selon ce mode de réalisation, le composé (E) est de préférence présent selon un ratio molaire (composé (E))/(élément Co apporté par le composé du cobalt (C)) compris entre 0,5 et 300, de préférence entre 5 et 100.

La présente invention a également pour objet une composition comprenant au moins un composé insaturé (A) comprenant au moins une fonction choisie parmi une fonction alcène et une fonction alcyne, au moins un composé (B) comprenant au moins une fonction hydrogénosilyle, un composé du cobalt (C) de formule (1) :

[Co(N(SiR₃)₂)ₓ]_{y} (1)

dans laquelle :
- les symboles R, identiques ou différents, représentent un atome d'hydrogène ou un radical hydrocarboné ayant de 1 à 12 atomes de carbone,
- x = 1, 2 ou 3, et
- y = 1 ou 2 ;
   un composé (D) de formule (2) suivante : 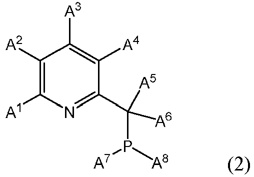
   dans laquelle :
      - A¹, A², A³ et A⁴ sont choisis, indépendamment les uns des autres, parmi l'atome d'hydrogène, les groupes alkyles ayant de 1 à 8 atomes de carbone, les groupes cycloalkyles ayant de 6 à 12 atomes de carbone, les groupes aryles ayant de 6 à 12 atomes de carbone, les groupes aryl-alkyles ayant de 7 à 24 atomes de carbone, les halogènes et les groupes alkoxy de formule OA⁹ où A⁹ est un groupe alkyle ayant de 1 à 8 atomes de carbone.
      - A⁵ et A⁶ sont choisis, indépendamment l'un de l'autre, parmi l'atome d'hydrogène, les groupes alkyle ayant de 1 à 8 atomes de carbone, les groupes cycloalkyles ayant de 6 à 12 atomes de carbone, les groupes aryles ayant de 6 à 12 atomes de carbone et les groupes aryl-alkyles ayant de 7 à 24 atomes de carbone, et
      - A⁷ et A⁸ sont choisis, indépendamment l'un de l'autre, parmi les groupes alkyles ayant de 1 à 8 atomes de carbone, les groupes cycloalkyles ayant de 6 à 12 atomes de carbone, les groupes aryles ayant de 6 à 12 atomes de carbone, les groupes aryl-alkyles ayant de 7 à 24 atomes de carbone et les groupes alkoxy de formule OA¹⁰ où A¹⁰ est un groupe alkyle ayant de 1 à 8 atomes de carbone,
   et un composé (E) de formule (3) suivante :

      R'-OH (3)
   dans laquelle R' représente l'atome d'hydrogène ou bien R' est choisi dans le groupe constitué par les groupes alkyle ayant de 1 à 8 atomes de carbone, les groupes cycloalkyles ayant de 6 à 12 atomes de carbone, les groupes aryles ayant de 6 à 12 atomes de carbone, les groupes aryl-alkyles ayant de 7 à 24 atomes de carbone, et les groupes silyles de formule Si(A¹¹)₃ où chaque A¹¹ est choisi, indépendamment les uns des autres, parmi les groupes alkyles ayant de 1 à 8 atomes de carbone.

Le composé insaturé (A) mis en œuvre dans le procède d'hydrosilylation selon l'invention est un composé chimique comprenant au moins une insaturation alcène ou alcyne ne faisant pas partie d'un cycle aromatique. Le composé insaturé (A) comprend au moins une fonction choisie parmi une fonction alcène et une fonction alcyne, de façon préférée au moins une fonction choisie parmi une fonction alcène. Il peut être choisi parmi ceux connus de l'homme du métier et qui ne contiennent pas de fonction chimique réactive pouvant gêner, voire empêcher la réaction d'hydrosilylation.

Selon un mode réalisation, le composé insaturé (A) comprend une ou plusieurs fonctions alcènes et de 2 à 40 atomes de carbone. Selon un autre mode de réalisation, le composé insaturé (A) comprend une ou plusieurs fonctions alcynes et de 2 à 40 atomes de carbone. De préférence, le composé insaturé (A) peut être choisi parmi les composés hydrocarbonés comprenant de 2 à 40 atomes de carbone, plus préférentiellement de 2 à 12 atomes de carbone, comprenant une ou plusieurs insaturations alcène ou alcyne ne faisant pas partie d'un cycle aromatique, éventuellement substitué une ou plusieurs fois par un atome d'halogène, et dans lequel un ou plusieurs atomes de carbone peuvent éventuellement être substitués par un hétéroatome, typiquement un atome d'oxygène, un atome d'azote ou un atome de silicium.

Le composé insaturé (A) peut, de façon préférée, être choisi dans le groupe constitué par l'acétylène, les acrylates et les méthacrylates d'alkyles en C₁ à C₄, l'acide acrylique ou méthacrylique, les alcènes, de préférence l'octène et plus préférentiellement le 1-octène, l'alcool allylique, l'allylamine, l'éther d'allyle et glycidyle, la N-allyl-pipéridine, les dérivés de N-allyl-pipéridine stériquement encombrée, les styrènes, préférentiellement l'alpha-méthyl-styrène, le 1,2-époxy-4-vinylcyclohexane, les alcènes chlorés, de préférence le chlorure d'allyle, et les alcènes fluorés, de préférence de 4,4,5,5,6,6,7,7,7-nonafluoro-1-heptène.

Le composé insaturé (A) peut être un disiloxane, tel que le vinyl-pentaméthyl-disiloxane et le divinyltétraméthyl-disiloxane.

Le composé insaturé (A) peut être choisi parmi les composés comprenant plusieurs fonctions alcènes, de préférence deux ou trois fonctions alcènes, et de façon particulièrement préférée, le composé (A) est choisi parmi les composés suivants :

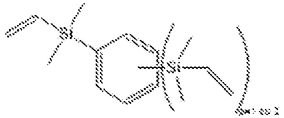

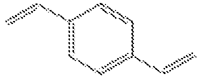

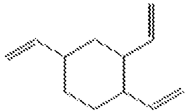

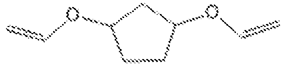

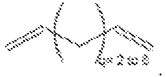

Selon un mode de réalisation particulièrement préféré, le composé insaturé (A) peut être un composé organopolysiloxane comprenant une ou plusieurs fonctions alcènes, de préférence au moins deux fonctions alcènes. La réaction d'hydrosilylation d'alcènes est l'une des réactions clés de la chimie des silicones. Elle permet non seulement la réticulation entre des organopolysiloxanes à fonctions SiH et des organopolysiloxanes à fonctions alcényles pour former des réseaux et apporter des propriétés mécaniques aux matériaux, mais également la fonctionnalisation des organopolysiloxanes à fonctions SiH pour modifier leurs propriétés physiques et chimiques. Ledit composé organopolysiloxane peut être notamment formé :
- d'au moins deux motifs siloxyle de formule suivante : ViₐU_{b}SiO_{(4-a-b)/2}
dans laquelle :
Vi est un groupe alcényle en C₂-C₆, de préférence vinyle,
U est un groupe hydrocarboné monovalent ayant de 1 à 12 atomes de carbone, de préférence choisi parmi les groupes alkyles ayant de 1 à 8 atomes de carbone tels que les groupes méthyle, éthyle, propyle, les groupes cycloalkyles ayant de 3 à 8 atomes de carbone et les groupes aryle ayant de 6 à 12 atomes de carbone, et
a=1, 2 ou 3, de préférence a=1 ou 2 ; b=0, 1 ou 2 ; et la somme a+b=1, 2 ou 3 ; et
- éventuellement de motifs de formule suivante : U_{c}SiO_{(4-c)/2}
dans laquelle U a la même signification que ci-dessus et c = 0, 1, 2 ou 3.

Il est entendu dans les formules ci-dessus que, si plusieurs groupes U sont présents, ils peuvent être identiques ou différents les uns des autres.

Ces composés organopolysiloxanes comprenant une ou plusieurs fonctions alcènes peuvent présenter une structure linéaire, essentiellement constitués de motifs siloxyles « D » et « D^{Vi} » choisis parmi le groupe constitué par les motifs siloxyles Vi₂SiO_{2/2}, ViUSiO_{2/2} et U₂SiO_{2/2}, et de motifs siloxyles « M » et « M^{Vi} » terminaux choisis parmi le groupe constitué par les motifs siloxyles ViU₂SiO_{1/2}, Vi₂USiO_{1/2} et U₃SiO_{1/2}. Les symboles Vi et U sont tels que décrits ci-dessus.

A titre d'exemples de motifs « M » et « M^{Vi} » terminaux, on peut citer les groupes triméthylsiloxy, diméthylphénylsiloxy, diméthylvinylsiloxy ou diméthylhexènylsiloxy.

A titre d'exemples de motifs « D » et « D^{Vi} », on peut citer les groupes diméthylsiloxy, méthylphénylsiloxy, méthylvinylsiloxy, méthylbutènylsiloxy, méthylhexènylsiloxy, méthyldécènylsiloxy ou méthyldécadiènylsiloxy.

Des exemples d'organopolysiloxanes linéaires pouvant être des composés organopolysiloxanes comprenant une ou plusieurs fonctions alcènes selon l'invention sont :
- un poly(diméthylsiloxane) à extrémités diméthylvinylsilyles ;
- un poly(diméthylsiloxane-co-méthylphénylsiloxane) à extrémités diméthyl-vinylsilyles ;
- un poly(diméthylsiloxane-co-méthylvinylsiloxane) à extrémités diméthyl-vinylsilyles ;
- un poly(diméthylsiloxane-co-méthylvinylsiloxane) à extrémités triméthyl-silyles ; et
- un poly(méthylvinylsiloxane) cycliques.

Dans la forme la plus recommandée, le composé organopolysiloxane comprenant une ou plusieurs fonctions alcènes contient des motifs diméthylvinylsilyles terminaux. Encore plus préférentiellement, le composé organopolysiloxanes comprenant une ou plusieurs fonctions alcènes est un poly(diméthylsiloxane) à extrémités diméthylvinylsilyles.

Une huile silicone a généralement une viscosité comprise entre 1 mPa.s et 2.000.000 mPa.s. De préférence, lesdits composés organopolysiloxanes comprenant une ou plusieurs fonctions alcènes sont des huiles silicones de viscosité dynamique comprise entre 20 mPa.s et 100.000 mPa.s, de préférence entre 20 mPa.s et 80.000 mPa.s à 25°C, et plus préférentiellement entre 100 mPa.s et 50.000 mPa.s.

Optionnellement, les composés organopolysiloxanes comprenant une ou plusieurs fonctions alcènes peuvent en outre contenir des motifs siloxyles « T » (USiO_{3/2}) et/ou des motifs siloxyles « Q » (SiO_{4/2}). Les symboles U sont tels que décrits ci-dessus. Les composés organopolysiloxanes comprenant une ou plusieurs fonctions alcènes présentent alors une structure ramifiée.

Des exemples d'organopolysiloxanes ramifiés, également nommés résines, pouvant être des composés organopolysiloxanes comprenant une ou plusieurs fonctions alcènes selon l'invention sont :
- MD^{Vi}Q, où les groupes vinyles sont inclus dans les motifs D,
- MD^{Vi}TQ, où les groupes vinyles sont inclus dans les motifs D,
- MM^{Vi}Q, où les groupes vinyles sont inclus dans une partie des motifs M,
- MM^{Vi}TQ, où les groupes vinyles sont inclus dans une partie des motifs M,
- MM^{Vi}DD^{Vi}Q, où les groupes vinyles sont inclus dans une partie des motifs M et D,
- et leurs mélanges ;
avec M^{Vi} = motif siloxyle de formule (U)₂(vinyle)SiO_{1/2}, D^{Vi} = motif siloxyle de formule (U)(vinyle)SiO_{2/2}, T = motif siloxyle de formule (U)SiO_{3/2}, Q = motif siloxyle de formule SiO_{4/2}, M = motif siloxyle de formule (U)₃SiO_{1/2}, et D = motif siloxyle de formule (U)₂SiO_{2/2}, U étant tels que décrits ci-dessus.

De préférence, le composé organopolysiloxane comprenant une ou plusieurs fonctions alcènes a une teneur massique en motif alcényle comprise entre 0,001% et 30%, de préférence entre 0,01% et 10%, de préférence entre 0,02 et 5%.

Le composé insaturé (A) réagit selon la présente invention avec un composé (B) comprenant au moins une fonction hydrogénosilyle.

Selon un mode de réalisation, le composé (B) comprenant au moins une fonction hydrogénosilyle est un composé silane ou polysilane comprenant au moins un atome d'hydrogène lié à un atome de silicium. Par composé « silane », on entend dans la présente invention les composés chimiques comprenant un atome de silicium lié à quatre atomes d'hydrogènes ou à des substituants organiques. Par composé « polysilane », on entend dans la présente invention les composés chimiques possédant au moins un motif ≡Si-Si≡. Parmi les composés silane, le composé (B) comprenant au moins une fonction hydrogénosilyle peut être le phénylsilane ou un mono-, di- ou tri-alkylsilane, par exemple le triéthylsilane.

Selon un autre mode de réalisation, le composé (B) comprenant au moins une fonction hydrogénosilyle est un composé organopolysiloxane comprenant au moins un atome d'hydrogène lié à un atome de silicium, également appelé organohydrogénopolysiloxane. Ledit organohydrogénopolysiloxane peut avantageusement être un organopolysiloxane formé :
- d'au moins deux motifs siloxyles de formule suivante : H_{d}UₑSiO_{(4-d-e)/2}
dans laquelle :
U est un groupe hydrocarboné monovalent ayant de 1 à 12 atomes de carbone, de préférence choisi parmi les groupes alkyles ayant de 1 à 8 atomes de carbone tels que les groupes méthyle, éthyle, propyle,
les groupes cycloalkyles ayant de 3 à 8 atomes de carbone et les groupes aryle ayant de 6 à 12 atomes de carbone, et
d=1, 2 ou 3, de préférence d=1 ou 2 ; e=0, 1 ou 2 ; et d+e=1, 2 ou 3 ; et
- éventuellement d'autres motifs de formule suivante : U_{f}SiO_{(4-f)/2}
dans laquelle U a la même signification que ci-dessus, et f = 0, 1, 2, ou 3.

Il est entendu dans les formules ci-dessus que, si plusieurs groupes U sont présents, ils peuvent être identiques ou différents les uns des autres. Préférentiellement U peut représenter un radical monovalent choisi dans le groupe constitué par les groupes alkyles ayant 1 à 8 atomes de carbone, éventuellement substitué par au moins un atome d'halogène tel que le chlore ou le fluor, les groupes cycloalkyles ayant de 3 à 8 atomes de carbone et les groupes aryles ayant de 6 à 12 atomes de carbone. U peut avantageusement être choisi dans le groupe constitué par le méthyle, l'éthyle, le propyle, le 3,3,3-trifluoropropyle, le xylyle, le tolyle et le phényle.

Dans la formule ci-dessus, le symbole d est préférentiellement égal à 1.

L'organohydrogénopolysiloxane peut présenter une structure linéaire, ramifiée, ou cyclique. Le degré de polymérisation est de préférence supérieur ou égal à 2. Généralement, il est inférieur à 5000.

Lorsqu'il s'agit de polymères linéaires, ceux-ci sont essentiellement constitués de motifs siloxyles choisis parmi les motifs de formules suivantes D : U₂SiO_{2/2} ou D' : UHSiO_{2/2}, et de motifs siloxyles terminaux choisis parmi les motifs de formules suivantes M : U₃SiO_{1/2} ou M' : U₂HSiO_{1/2}, où U a la même signification que ci-dessus.

Des exemples d'organohydrogénopolysiloxanes pouvant être des composés (B) comprenant au moins une fonction hydrogénosilyle selon l'invention sont :
- un poly(diméthylsiloxane) à extrémités hydrogénodiméthylsilyles ;
- un poly(diméthylsiloxane-co-méthylhydrogénosiloxane) à extrémités triméthyl-silyles ;
- un poly(diméthylsiloxane-co-méthylhydrogénosiloxane) à extrémités hydrogéno-diméthylsilyles ;
- un poly(méthylhydrogénosiloxane) à extrémités triméthylsilyles ; et
- un poly(méthylhydrogénosiloxane) cyclique.

Lorsque l'organohydrogénopolysiloxane présente une structure ramifiée, il est choisi de préférence parmi le groupe constitué par les résines silicones de formules suivantes :
- M'Q où les atomes d'hydrogène liés à des atomes de silicium sont portés par les groupes M,
- MM'Q où les atomes d'hydrogène liés à des atomes de silicium sont portés par une partie des motifs M,
- MD'Q où les atomes d'hydrogène liés à des atomes de silicium sont portés par les groupes D,
- MDD'Q où les atomes d'hydrogène liés à des atomes de silicium sont portés par une partie des groupes D,
- MM'TQ où les atomes d'hydrogène liés à des atomes de silicium sont portés par une partie des motifs M,
- MM'DD'Q où les atomes d'hydrogène liés à des atomes de silicium sont portés par une partie des motifs M et D,
- et leurs mélanges,
avec M,M', D et D' tels que définis précédemment, T : motif siloxyle de formule USiO_{3/2} et Q : motif siloxyle de formule SiO_{4/2}, où U a la même signification que ci-dessus.

De préférence, le composé organohydrogénopolysiloxane a une teneur massique en fonctions hydrogénosilyle Si-H comprise entre 0,2% et 91%, plus préférentiellement entre 3% et 80%, et encore plus préférentiellement entre 15% et 70%.

Selon un mode de réalisation particulier de la présente invention, il est possible que le composé insaturé (A) et le composé (B) comprenant au moins une fonction hydrogénosilyle soient un seul et même composé, comprenant d'une part au moins une fonction cétone, une fonction aldéhyde, une fonction alcène et/ou une fonction alcyne, et d'autre part au moins un atome de silicium et au moins un atome d'hydrogène lié à l'atome de silicium. Ce composé peut alors être qualifie de « bifonctionnel », et il est susceptible de réagir avec lui-même par réaction d'hydrosilylation. L'invention peut donc aussi concerner un procédé d'hydrosilylation d'un composé bifonctionnel avec lui-même, ledit composé bifonctionnel comprenant d'une part au moins une fonction choisie dans le groupe constitué par une fonction cétone, une fonction aldéhyde, une fonction alcène et une fonction alcyne (de préférence au moins une fonction alcène et/ou au moins une fonction alcyne), et d'autre part au moins un atome de silicium et au moins un atome d'hydrogène lié à l'atome de silicium, ledit procédé étant catalysé par un composé du cobalt (C) en présence d'un composé (D) et d'un composé (E) tels que décrits ci-dessus.

Des exemples d'organopolysiloxanes pouvant être des composés bifonctionnels sont :
- un poly(diméthylsiloxane-co-hydrogénométhylsiloxane-co-vinylméthyl-siloxanes) à extrémités diméthylvinylsilyles ;
- un poly(diméthylsiloxane-co-hydrogénométhylsiloxane-co-vinylméthyl-siloxanes) à extrémités diméthylhydrogénosilyles ; et
- un poly(diméthylsiloxane-co-hydrogénomethylsiloxane-co-propylglycidylétherméthylsiloxane) à extrémités triméthylsilyles.

Lorsqu'il est question de la mise en œuvre du composé insaturé (A) et du composé (B) comprenant au moins une fonction hydrogénosilyle, l'homme du métier comprend qu'on entend également la mise en œuvre d'un composé bifonctionnel.

Les quantités de composé (A) et de composé (B) peuvent être contrôlées de façon à ce que le rapport molaire des fonctions hydrogénosilyles des composés (B) sur les fonctions alcènes et alcynes des composés (A) soit de préférence compris entre 1:10 et 10:1, de façon plus préférée entre 1:5 et 5:1, et de façon plus préférée entre 1:3 et 3:1.

La réaction d'hydrosilylation peut être réalisée dans un solvant ou en l'absence de solvant. En variante, un des réactifs, par exemple le composé insaturé (A), peut jouer le rôle de solvant. Des solvants appropriés sont des solvants miscibles avec le composé (B). La réaction d'hydrosilylation peut être conduite à une température comprise entre 15°C et 300°C, préférentiellement entre 20°C et 240°C, plus préférentiellement entre 50°C et 200°C, plus préférentiellement entre 50°C et 140°C, et encore plus préférentiellement entre 50°C et 100°C.

Selon un mode préféré de réalisation de l'invention, les composés (A) et (B) mis en œuvre sont choisis parmi les organopolysiloxanes tels que définis ci-dessus. Dans ce cas, un réseau en trois dimensions se forme, ce qui conduit au durcissement de la composition. La réticulation implique un changement physique progressif du milieu constituant la composition. Par conséquent, le procédé selon l'invention peut être utilisé pour obtenir des élastomères, des gels, des mousses etc. On obtient dans ce cas, un matériau silicone réticulé. On entend par « matériau silicone réticulé » tout produit à base de silicone obtenu par réticulation et/ou durcissement de compositions comprenant des organopolysiloxanes possédant au moins deux liaisons insaturées et des organopolysiloxanes possédant au moins trois motifs hydrogénosilylés. Le matériau silicone réticulé peut par exemple être un élastomère, un gel ou une mousse.

Toujours selon ce mode préféré de réalisation du procédé selon l'invention, où les composés (A) et (B) sont choisis parmi les organopolysiloxanes tels que définis ci-dessus, on peut mettre en œuvre des additifs fonctionnels habituels dans les compositions silicones. Comme familles d'additifs fonctionnels usuels, on peut citer :
- les charges,
- les promoteurs d'adhérence,
- les inhibiteurs ou retardateurs de la réaction d'hydrosilylation,
- les modulateurs d'adhérence,
- les résines silicones,
- les additifs pour augmenter la consistance,
- les pigments, et
- les additifs de tenue thermique, de tenue aux huiles ou de tenue au feu, par exemple les oxydes métalliques.

D'autres détails ou avantages de l'invention apparaîtront plus clairement au vu des exemples donnés ci-dessous uniquement à titre indicatif.

### Exemples

Toutes les expériences impliquant des composés sensibles à l'air et à l'humidité ont été effectuées sous atmosphère inerte d'argon sec et en boite à gants. Avant utilisation, les solvants et les réactifs utilisés ont été purifiés et dégazés, et séchés et stockés sur tamis moléculaire.

### Exemple 1 : Synthèse du complexe bisamidure de cobalt (II) Co[N(SiMe₃)₃]₂ (COBAM)

1,0830 g (8,34x10⁻³ mol) de chlorure de cobalt COCl₂ et 2,7895 g (1,67x10⁻² mol) de bis(triméthylsilyl)amide de lithium LiN(SiMe₃)₂ ont été pesés en boite à gants dans un tube de Schlenk de 200 mL. 100 mL de Et₂O ont été ajoutés dans le tube plongé dans un bain de glace, puis la suspension a été agitée pendant 10h à 0°C. La solution a pris une couleur vert foncé et un précipité blanc/gris s'est formé. Le solvant a été évaporé et le complexe a été extrait 3 fois par 30 mL de pentane. Après évaporation du pentane, une huile verte très visqueuse a été obtenue. Cette huile a été ensuite sublimée sous vide secondaire (10⁻⁷ mbar) à 80°C menant à la formation d'une poudre marron-rouge brique. Rendement = 70%.

### Exemple 2 : Synthèse du complexe bisamidure de cobalt (II) + ligand (COBAM+PN)

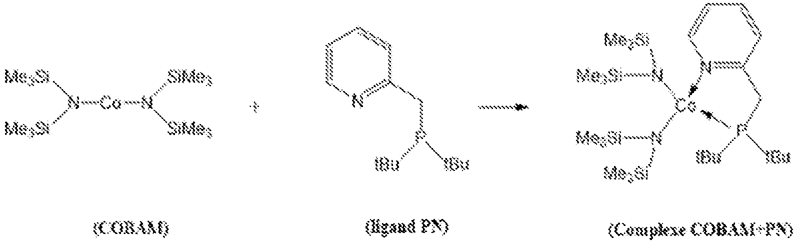

40,1 mg de 2-(di-t-butylphosphinométhyl)pyridine (ci-après « ligand PN ») (1,69x10⁻⁴ mol) ont été dissous dans 3 mL de pentane. En parallèle, 64,2 mg de Co[N(SiMe₃)₂]₂ (COBAM) obtenu comme décrit à l'exemple 1 (1,69x10⁻⁴ mol) ont été dissous dans 3 mL de pentane. La solution de ligand PN a été ensuite additionnée à la solution de bisamidure de cobalt (II). Le milieu a été laissé sous agitation pendant 1h à température ambiante. Le pentane a ensuite été évaporé et une poudre vert clair a été obtenue avec un rendement supérieur à 98%. La structure du complexe bisamidure de cobalt (II) + ligand PN a été confirmée par RMN.

### Exemples 3-10 : Tests de fonctionnalisation

La masse désirée du complexe bisamidure de cobalt (II) (COBAM) obtenu comme décrit à l'exemple 1 a été pesée en boite à gants, sous atmosphère inerte d'argon, et a été introduite dans des flacons hermétiques secs. La masse désirée de ligand PN a été pesée et introduite dans les flacons. 0,3 g de dodécane ont été ajoutés et le milieu a été mis sous agitation afin de dissoudre le précatalyseur. Ensuite, la masse désirée de composé insaturé (A) a été introduite, suivie de la masse désirée de composé (B). Sous flux d'argon et à l'aide d'une micropipette, le volume désirée de composé (E) a été introduit. Les milieux réactifs ont été alors mis sous agitation pendant 5 minutes puis ils ont été placés dans le barillet métallique préalablement chauffé à 75°C (t=0).

Pour déterminer les conversions et les sélectivités, le milieu réactionnel a été analysé quantitativement par chromatographie en phase gaz.

Pour tous les exemples 3 à 15 : Le composé (B) utilisé est le 1,1,1,3,5,5,5-heptaméthyl-3-hydrogéno-trisiloxane (ci-après « MD'M »). Ratio molaire SiH/SiVi = 1. Quantité de catalyseur (COBAM) = 0,5 mol.% (pourcentage molaire d'élément cobalt apporté par le catalyseur par rapport au nombre de moles de radicaux vinyles liés au silicium apporté par le composé (B)).

**[Table 1]**

| | Système catalytique | Composé (A) | Composé (E) ratio molaire (E)/Co | Conversion MD'M | Sélectivité de hydrosilylation (vs. 1-octène) |
|---|---|---|---|---|---|
| Ex.3 | (COBAM) (pas de ligand PN) | 1-octène | 0 | 40% à 24h | 36% à 24h |
| Ex.4 | (COBAM) (pas de ligand PN) | 1-octène | eau (substrats non dégazés et non séchés) | 0% à 24h | 0% à 24h |
| Ex. 5 | (COBAM) + ligand PN (2éq.) | 1-octène | 0 | 4% à 40min | 0% à 40min |
| Ex. 6 | (COBAM) + ligand PN (2éq.) | 1-octène | eau ratio eau/Co = 1 | 75% à 40min | 83% à 40min |
| Ex. 7 | (COBAM) + ligand PN (2éq.) | 1-octène | eau ratio eau/Co = 10 | 42% à 40min | 52% à 40min |
| Ex. 8 | (COBAM) + ligand PN (2éq.) | 1-octène | eau ratio eau/Co = 60 | 15% à 40min | 22% à 40min |
| Ex. 9 | (COBAM) + ligand PN (2éq.) | vinyl-pentaméthyl-disiloxane | 0 | 13% à 40min | 65% à 40min |
| Ex. 10 | (COBAM) + ligand PN (2éq.) | vinyl-pentaméthyl-disiloxane | eau ratio eau/Co = 1 | 85% à 40min | 87% à 40min |
| Ex. 11 | (COBAM) + ligand PN (2éq.) | 1-octène | alcool benzylique ratio (E)/Co =1 | 50% à 40min | 60% à 40min |
| Ex. 12 | (COBAM) + ligand PN (2éq.) | 1-octène | éthanol ratio (E)/Co =1 | 47% à 40min | 50% à 40min |
| Ex. 13 | (COBAM) + ligand PN (2éq.) | 1-octène | isopropanol ratio (E)/Co =1 | 59% à 40min | 64% à 40min |
| Ex. 14 | (COBAM) + ligand PN (2éq.) | 1-octène | triméthylsilanol ratio (E)/Co =1 | 71% à 40min | 77% à 40min |
| Ex. 15 | (COBAM) + ligand PN (2éq.) | 1-octène | triisopropylsilanol ratio (E)/Co =1 | 89% à 40min | 89% à 40min |

### Exemples 16-26 : Tests de réticulation

La masse désirée du complexe bisamidure de cobalt (II) (COBAM) a été pesée en boite à gants, sous atmosphère inerte d'argon, et a été introduite dans des flacons hermétiques secs. La masse désirée de ligand PN a été pesée et introduite dans les flacons. Les organopolysiloxanes ont alors été introduits dans l'ordre suivant : d'abord, l'organopolysiloxane insaturé (A) a été injecté. Puis le milieu a été mis sous agitation afin de dissoudre le complexe (COBAM). Enfin, l'organopolysiloxane hydrogéné (B) a été ajouté. Sous flux d'argon et à l'aide d'une micropipette, le volume désirée de composé (E) a été introduit. Les milieux réactifs ont alors été mis sous agitation pendant 5 minutes, puis placés dans le barillet métallique préalablement chauffé à 90°C (t=0).

Le temps de gel pour les expériences de réticulation est mesuré qualitativement par un temps d'arrêt d'agitation (TAA). Ce TAA est lié à une augmentation de la viscosité tellement importante que le milieu n'est plus agitable (équivalent à une viscosité d'environ 1000 mPa.s).

Pour tous les exemples 16 à 26 : Ratio molaire SiH/SiVi = 2. Quantité de catalyseur (COBAM) = 1 mol.% (pourcentage molaire d'élément cobalt apporté par le catalyseur par rapport au nombre de moles de radicaux vinyles liés au silicium apporté par le composé (B)).

A1 : poly(diméthylsiloxane) à extrémités diméthylvinylsilyles, viscosité à 25°C : environ 100 mPa.s, teneur en groupes vinyl : environ 1,08% en poids.

B1 : poly(méthylhydrogénosiloxane) à extrémités triméthylsilyles, viscosité à 25°C : environ 20 mPa.s, teneur en groupes SiH : environ 44,5% en poids.

B2 : poly(diméthylsiloxane-co-méthylhydrogénosiloxane) à extrémités hydrogéno-diméthylsilyles et triméthylsilyles, viscosité à 25°C : environ 20 mPa.s, teneur en groupes SiH : environ 20% en poids.

**[Table 2]**

| | Système catalytique | Composé (A) | Composé (B) | Composé (E) ratio molaire (E)/Co | TAA |
|---|---|---|---|---|---|
| Ex.16 | (COBAM) (pas de ligand PN) | A1 | B1 | 0 | 38 min |
| Ex.17 | (COBAM) (pas de ligand PN) | A1 | B1 | eau ratio eau/Co = 60 | Entre 9h et 20h |
| Ex. 18 | (COBAM) + ligand PN (2éq.) | A1 | B1 | 0 | 37 min |
| Ex. 19 | (COBAM) + ligand PN (2éq.) | A1 | B1 | eau ratio eau/Co = 0,5 | 15 min |
| Ex. 20 | (COBAM) + ligand PN (2éq.) | A1 | B1 | eau ratio eau/Co = 1 | 8 min |
| Ex. 21 | (COBAM) + ligand PN (2éq.) | A1 | B1 | eau ratio eau/Co = 10 | 2 min |
| Exe 22 | (COBAM) + ligand PN (2éq.) | A1 | B1 | eau ratio eau/Co = 40 | 1,5 min |
| Ex. 23 | (COBAM) + ligand PN (2éq.) | A1 | B1 | eau ratio eau/Co = 60 | 1 min |
| Ex. 24 | (COBAM) + ligand PN (2éq.) | A1 | B1 | eau ratio eau/Co = 200 | 4,5 min |
| Ex. 25 | (COBAM) + ligand PN (2éq.) | A1 | B2 | 0 | 15 min |
| Ex. 26 | (COBAM) + ligand PN (2éq.) | A1 | B2 | eau ratio eau/Co = 1 | 8 min |

## Revendications

1. Procédé d'hydrosilylation d'un composé insaturé A comprenant au moins une fonction choisie parmi une fonction alcène et une fonction alcyne, avec un composé B comprenant au moins une fonction hydrogénosilyle, ledit procédé comprenant l'étape consistant à mettre en présence ledit composé insaturé A, ledit composé B, un composé du cobalt C de formule (1) :
[Co(N(SiR₃)₂)ₓ]_{y} (1)
dans laquelle :
- les symboles R, identiques ou différents, représentent un atome d'hydrogène ou un radical hydrocarboné ayant de 1 à 12 atomes de carbone,
- x = 1, 2 ou 3, et
- y = 1 ou 2 ;
un composé D de formule (2) suivante : 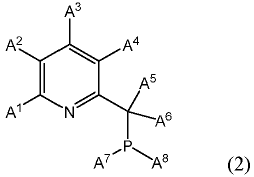
dans laquelle :
- A¹, A², A³ et A⁴ sont choisis, indépendamment les uns des autres, parmi l'atome d'hydrogène, les groupes alkyles ayant de 1 à 8 atomes de carbone, les groupes cycloalkyles ayant de 6 à 12 atomes de carbone, les groupes aryles ayant de 6 à 12 atomes de carbone, les groupes aryl-alkyles ayant de 7 à 24 atomes de carbone, les halogènes et les groupes alkoxy de formule OA⁹ où A⁹ est un groupe alkyle ayant de 1 à 8 atomes de carbone.
- A⁵ et A⁶ sont choisis, indépendamment l'un de l'autre, parmi l'atome d'hydrogène, les groupes alkyle ayant de 1 à 8 atomes de carbone, les groupes cycloalkyles ayant de 6 à 12 atomes de carbone, les groupes aryles ayant de 6 à 12 atomes de carbone et les groupes aryl-alkyles ayant de 7 à 24 atomes de carbone, et
- A⁷ et A⁸ sont choisis, indépendamment l'un de l'autre, parmi les groupes alkyles ayant de 1 à 8 atomes de carbone, les groupes cycloalkyles ayant de 6 à 12 atomes de carbone, les groupes aryles ayant de 6 à 12 atomes de carbone, les groupes aryl-alkyles ayant de 7 à 24 atomes de carbone et les groupes alkoxy de formule OA¹⁰ où A¹⁰ est un groupe alkyle ayant de 1 à 8 atomes de carbone,
et un composé E de formule (3) suivante :
R'-OH (3)
dans laquelle R' représente l'atome d'hydrogène ou bien R' est choisi dans le groupe constitué par les groupes alkyle ayant de 1 à 8 atomes de carbone, les groupes cycloalkyles ayant de 6 à 12 atomes de carbone, les groupes aryles ayant de 6 à 12 atomes de carbone, les groupes aryl-alkyles ayant de 7 à 24 atomes de carbone, et les groupes silyles de formule Si(A¹¹)₃ où chaque A¹¹ est choisi, indépendamment les uns des autres, parmi les groupes alkyles ayant de 1 à 8 atomes de carbone.

2. Procédé selon la revendication 1, dans lequel le composé E est l'eau.

3. Procédé selon la revendication 1, dans lequel le composé E est un alcool ou un silanol de formule (3) suivante :
R'-OH (3)
dans laquelle R' est choisi dans le groupe constitué par les groupes alkyle ayant de 1 à 8 atomes de carbone, les groupes cycloalkyles ayant de 6 à 12 atomes de carbone, les groupes aryles ayant de 6 à 12 atomes de carbone, les groupes aryl-alkyles ayant de 7 à 24 atomes de carbone, et les groupes silyles de formule Si(A¹¹)₃ où chaque A¹¹ est choisi, indépendamment les uns des autres, parmi les groupes alkyles ayant de 1 à 8 atomes de carbone.

4. Procédé selon l'une quelconque des revendications 1 à 3, dans lequel le composé E est présent selon un ratio molaire (composé E)/(élément Co apporté par le composé du cobalt C) compris entre 0,1 et 500, plus préférentiellement entre 0,5 et 100.

5. Procédé selon l'une quelconque des revendications 1 à 4, dans lequel le composé du cobalt C est représenté par la formule suivante :
[Co(N(Si(CH₃)₃)₂)₂]_{y}
dans laquelle y vaut 1 ou 2.

6. Procédé selon l'une quelconque des revendications 1 à 5, dans lequel le composé D est représenté par la formule (2) suivante : 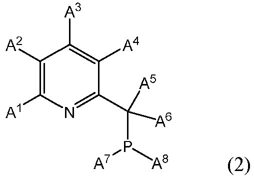 dans laquelle :
- A¹, A², A³ et A⁴ sont des atomes d'hydrogène,
- A⁵ et A⁶ sont des atomes d'hydrogène,
- A⁷ et A⁸ sont choisis parmi les groupes alkyles ayant de 1 à 8 atomes de carbone, les groupes cycloalkyles ayant de 6 à 12 atomes de carbone, les groupes aryles ayant de 6 à 12 atomes de carbone, les groupes aryl-alkyles ayant de 7 à 24 atomes de carbone et les groupes alkoxy de formule OA¹⁰ où A¹⁰ est un groupe alkyle ayant de 1 à 8 atomes de carbone ; et de préférence A⁷ et A⁸ sont choisis parmi les groupes t-butyle, isopropyle, méthyle, éthyle, phényle et cyclohexyle.

7. Procédé selon l'une quelconque des revendications 1 à 6, dans lequel le composé insaturé A n'est pas un organopolysiloxane et est choisi parmi les composés hydrocarbonés comprenant de 2 à 40 atomes de carbone, plus préférentiellement de 2 à 12 atomes de carbone, comprenant une ou plusieurs insaturations alcène ou alcyne ne faisant pas partie d'un cycle aromatique, éventuellement substitué une ou plusieurs fois par un atome d'halogène, et dans lequel un ou plusieurs atomes de carbone peuvent éventuellement être substitués par un hétéroatome, typiquement un atome d'oxygène, un atome d'azote ou un atome de silicium

8. Procédé selon la revendication 7, dans lequel le composé E est présent selon un ratio molaire (composé E)/(élément Co apporté par le composé du cobalt C) compris entre 0,1 et 100, de préférence entre 0,1 et 50, de façon encore plus préférée entre 0,5 et 15.

9. Procédé selon l'une quelconque des revendications 1 à 6, dans lequel le composé insaturé A est un composé organopolysiloxane comprenant une ou plusieurs fonctions alcènes, de préférence au moins deux fonctions alcènes.

10. Procédé selon la revendication 9, dans lequel le composé E est présent selon un ratio molaire (composé E)/(élément Co apporté par le composé du cobalt C) compris entre 0,5 et 300, de préférence entre 5 et 100.

11. Composition comprenant :
- au moins un composé insaturé A comprenant au moins une fonction choisie parmi une fonction alcène et une fonction alcyne,
- au moins un composé B comprenant au moins une fonction hydrogénosilyle,
- un composé du cobalt C de formule (1) :
[Co(N(SiR₃)₂)ₓ]_{y} (1)
dans laquelle :
les symboles R, identiques ou différents, représentent un atome d'hydrogène ou un radical hydrocarboné ayant de 1 à 12 atomes de carbone,
x = 1, 2 ou 3, et
y = 1 ou 2 ;
- un composé D de formule (2) suivante : 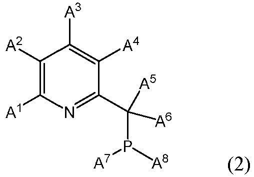 dans laquelle :
A¹, A², A³ et A⁴ sont choisis, indépendamment les uns des autres, parmi l'atome d'hydrogène, les groupes alkyles ayant de 1 à 8 atomes de carbone, les groupes cycloalkyles ayant de 6 à 12 atomes de carbone, les groupes aryles ayant de 6 à 12 atomes de carbone, les groupes aryl-alkyles ayant de 7 à 24 atomes de carbone, les halogènes et les groupes alkoxy de formule OA⁹ où A⁹ est un groupe alkyle ayant de 1 à 8 atomes de carbone.
A⁵ et A⁶ sont choisis, indépendamment l'un de l'autre, parmi l'atome d'hydrogène, les groupes alkyle ayant de 1 à 8 atomes de carbone, les groupes cycloalkyles ayant de 6 à 12 atomes de carbone, les groupes aryles ayant de 6 à 12 atomes de carbone et les groupes aryl-alkyles ayant de 7 à 24 atomes de carbone, et
A⁷ et A⁸ sont choisis, indépendamment l'un de l'autre, parmi les groupes alkyles ayant de 1 à 8 atomes de carbone, les groupes cycloalkyles ayant de 6 à 12 atomes de carbone, les groupes aryles ayant de 6 à 12 atomes de carbone, les groupes aryl-alkyles ayant de 7 à 24 atomes de carbone et les groupes alkoxy de formule OA¹⁰ où A¹⁰ est un groupe alkyle ayant de 1 à 8 atomes de carbone, et
- un composé E de formule (3) suivante :
R'-OH (3)
dans laquelle R' représente l'atome d'hydrogène ou bien R' est choisi dans le groupe constitué par les groupes alkyle ayant de 1 à 8 atomes de carbone, les groupes cycloalkyles ayant de 6 à 12 atomes de carbone, les groupes aryles ayant de 6 à 12 atomes de carbone, les groupes aryl-alkyles ayant de 7 à 24 atomes de carbone, et les groupes silyles de formule Si(A¹¹)₃ où chaque A¹¹ est choisi, indépendamment les uns des autres, parmi les groupes alkyles ayant de 1 à 8 atomes de carbone.

12. Composition selon la revendication 11, dans laquelle le composé E est présent selon un ratio molaire (composé E)/(élément Co apporté par le composé du cobalt C) compris entre 0,1 et 500, plus préférentiellement entre 0,5 et 100.

## Patentansprüche

1. Verfahren zur Hydrosilylierung einer ungesättigten Verbindung A, die mindestens eine aus einer Alkenfunktion und einer Alkinfunktion ausgewählte Funktion umfasst, mit einer Verbindung B, die mindestens eine Hydrogensilylfunktion umfasst, wobei das Verfahren den Schritt umfasst, der darin besteht, dass man Folgendes in Kontakt bringt: die ungesättigte Verbindung A, die Verbindung B, eine Cobaltverbindung C der Formel (1):
[Co(N(SiR₃)₂)ₓ]_{y} (1)
in der:
- die Symbole R, die gleich oder verschieden sind, für ein Wasserstoffatom oder einen Kohlenwasserstoffrest mit 1 bis 12 Kohlenstoffatomen stehen;
- x = 1, 2 oder 3 und
- y = 1 oder 2;
eine Verbindung D der folgenden Formel (2): 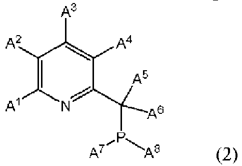
in der:
- A¹, A², A³ und A⁴ unabhängig voneinander aus einem Wasserstoffatom, Alkylgruppen mit 1 bis 8 Kohlenstoffatomen, Cycloalkylgruppen mit 6 bis 12 Kohlenstoffatomen, Arylgruppen mit 6 bis 12 Kohlenstoffatomen, Arylalkylgruppen mit 7 bis 24 Kohlenstoffatomen, Halogenen und Alkoxygruppen der Formel OA⁹ ausgewählt sind, wobei A⁹ eine Alkylgruppe mit 1 bis 8 Kohlenstoffatomen ist,
- A⁵ und A⁶ unabhängig voneinander aus einem Wasserstoffatom, Alkylgruppen mit 1 bis 8 Kohlenstoffatomen, Cycloalkylgruppen mit 6 bis 12 Kohlenstoffatomen, Arylgruppen mit 6 bis 12 Kohlenstoffatomen und Arylalkylgruppen mit 7 bis 24 Kohlenstoffatomen ausgewählt sind und
- A⁷ und A⁸ unabhängig voneinander aus Alkylgruppen mit 1 bis 8 Kohlenstoffatomen, Cycloalkylgruppen mit 6 bis 12 Kohlenstoffatomen, Arylgruppen mit 6 bis 12 Kohlenstoffatomen, Arylalkylgruppen mit 7 bis 24 Kohlenstoffatomen und Alkoxygruppen der Formel OA¹⁰ ausgewählt sind, wobei A¹⁰ eine Alkylgruppe mit 1 bis 8 Kohlenstoffatomen ist,
und eine Verbindung E der folgenden Formel (3):
R'-OH (3)
in der R' für ein Wasserstoffatom steht oder auch R' aus der Gruppe bestehend aus Alkylgruppen mit 1 bis 8 Kohlenstoffatomen, Cycloalkylgruppen mit 6 bis 12 Kohlenstoffatomen, Arylgruppen mit 6 bis 12 Kohlenstoffatomen, Arylalkylgruppen mit 7 bis 24 Kohlenstoffatomen und Silylgruppen der Formel Si(A¹¹)₃ ausgewählt ist, wobei A¹¹ jeweils unabhängig voneinander aus Alkylgruppen mit 1 bis 8 Kohlenstoffatomen ausgewählt ist.

2. Verfahren nach Anspruch 1, wobei es sich bei der Verbindung E um Wasser handelt.

3. Verfahren nach Anspruch 1, wobei es sich bei der Verbindung E um einen Alkohol oder ein Silanol der folgenden Formel (3) handelt:
R'-OH (3)
in der R' aus der Gruppe bestehend aus Alkylgruppen mit 1 bis 8 Kohlenstoffatomen, Cycloalkylgruppen mit 6 bis 12 Kohlenstoffatomen, Arylgruppen mit 6 bis 12 Kohlenstoffatomen, Arylalkylgruppen mit 7 bis 24 Kohlenstoffatomen und Silylgruppen der Formel Si(A¹¹)₃ ausgewählt ist, wobei A¹¹ jeweils unabhängig voneinander aus Alkylgruppen mit 1 bis 8 Kohlenstoffatomen ausgewählt ist.

4. Verfahren nach einem der Ansprüche 1 bis 3, wobei die Verbindung E in einem Molverhältnis (Verbindung E)/(Co-Element, das von der Cobaltverbindung C bereitgestellt wird) zwischen 0,1 und 500, weiter bevorzugt zwischen 0,5 und 100, vorliegt.

5. Verfahren nach einem der Ansprüche 1 bis 4, wobei die Cobaltverbindung C durch die folgende Formel wiedergegeben wird:
[Co(N(Si(CH₃))₂)₂]_{y}
in der y gleich 1 oder 2 ist.

6. Verfahren nach einem der Ansprüche 1 bis 5, wobei die Verbindung D durch die folgende Formel (2) wiedergegeben wird: 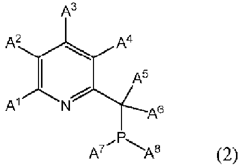 in der:
- A¹, A², A³ und A⁴ Wasserstoffatome sind,
- A⁵ und A⁶ Wasserstoffatome sind,
- A⁷ und A⁸ aus Alkylgruppen mit 1 bis 8 Kohlenstoffatomen, Cycloalkylgruppen mit 6 bis 12 Kohlenstoffatomen, Arylgruppen mit 6 bis 12 Kohlenstoffatomen, Arylalkylgruppen mit 7 bis 24 Kohlenstoffatomen und Alkoxygruppen der Formel OA¹⁰ ausgewählt sind, wobei A¹⁰ eine Alkylgruppe mit 1 bis 8 Kohlenstoffatomen ist, und vorzugsweise A⁷ und A⁸ aus t-Butyl-, Isopropyl-, Methyl-, Ethyl-, Phenyl- und Cyclohexylgruppen ausgewählt sind.

7. Verfahren nach einem der Ansprüche 1 bis 6, wobei die ungesättigte Verbindung A kein Organopolysiloxan ist und aus Kohlenwasserstoffverbindungen mit 2 bis 40 Kohlenstoffatomen, weiter bevorzugt 2 bis 12 Kohlenstoffatomen, mit einer oder mehreren Alken- oder Alkin-Ungesättigtheiten, die nicht Teil eines aromatischen Rings sind, ausgewählt ist und gegebenenfalls ein- oder mehrfach durch ein Halogenatom substituiert ist und wobei ein oder mehrere Kohlenstoffatome gegebenenfalls durch ein Heteroatom, typischerweise ein Sauerstoffatom, ein Stickstoffatom oder ein Siliciumatom, ersetzt sein können.

8. Verfahren nach Anspruch 7, wobei die Verbindung E in einem Molverhältnis (Verbindung E)/(Co-Element, das von der Cobaltverbindung C bereitgestellt wird) zwischen 0,1 und 100, bevorzugt zwischen 0,1 und 50, noch weiter bevorzugt zwischen 0,5 und 15, vorliegt.

9. Verfahren nach einem der Ansprüche 1 bis 6, wobei es sich bei der ungesättigten Verbindung A um eine Organopolysiloxanverbindung mit einer oder mehreren Alkenfunktionen, bevorzugt mindestens zwei Alkenfunktionen, handelt.

10. Verfahren nach Anspruch 9, wobei die Verbindung E in einem Molverhältnis (Verbindung E)/(Co-Element, das von der Cobaltverbindung C bereitgestellt wird) zwischen 0,5 und 300, bevorzugt zwischen 5 und 100, vorliegt.

11. Zusammensetzung, umfassend:
- mindestens eine ungesättigte Verbindung A, die mindestens eine aus einer Alkenfunktion und einer Alkinfunktion ausgewählte Funktion umfasst;
- mindestens eine Verbindung B, die mindestens eine Hydrogensilylfunktion umfasst,
- eine Cobaltverbindung C der Formel (1):
[Co(N(SiR₃)₂)ₓ]_{y} (1)
in der:
die Symbole R, die gleich oder verschieden sind, für ein Wasserstoffatom oder einen Kohlenwasserstoffrest mit 1 bis 12 Kohlenstoffatomen stehen;
x = 1, 2 oder 3, und
y = 1 oder 2;
- eine Verbindung D der folgenden Formel (2): 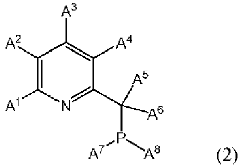 in der:
A¹, A², A³ und A⁴ unabhängig voneinander aus einem Wasserstoffatom, Alkylgruppen mit 1 bis 8 Kohlenstoffatomen, Cycloalkylgruppen mit 6 bis 12 Kohlenstoffatomen, Arylgruppen mit 6 bis 12 Kohlenstoffatomen, Arylalkylgruppen mit 7 bis 24 Kohlenstoffatomen, Halogenen und Alkoxygruppen der Formel OA⁹ ausgewählt sind, wobei A⁹ eine Alkylgruppe mit 1 bis 8 Kohlenstoffatomen ist,
A⁵ und A⁶ unabhängig voneinander aus einem Wasserstoffatom, Alkylgruppen mit 1 bis 8 Kohlenstoffatomen, Cycloalkylgruppen mit 6 bis 12 Kohlenstoffatomen, Arylgruppen mit 6 bis 12 Kohlenstoffatomen und Arylalkylgruppen mit 7 bis 24 Kohlenstoffatomen ausgewählt sind und
A⁷ und A⁸ unabhängig voneinander aus Alkylgruppen mit 1 bis 8 Kohlenstoffatomen, Cycloalkylgruppen mit 6 bis 12 Kohlenstoffatomen, Arylgruppen mit 6 bis 12 Kohlenstoffatomen, Arylalkylgruppen mit 7 bis 24 Kohlenstoffatomen und Alkoxygruppen der Formel OA¹⁰ ausgewählt sind, wobei A¹⁰ eine Alkylgruppe mit 1 bis 8 Kohlenstoffatomen ist, und
- eine Verbindung E der folgenden Formel (3):
R'-OH (3)
in der R' für ein Wasserstoffatom steht oder auch R' aus der Gruppe bestehend aus Alkylgruppen mit 1 bis 8 Kohlenstoffatomen, Cycloalkylgruppen mit 6 bis 12 Kohlenstoffatomen, Arylgruppen mit 6 bis 12 Kohlenstoffatomen, Arylalkylgruppen mit 7 bis 24 Kohlenstoffatomen und Silylgruppen der Formel Si(A¹¹)₃ ausgewählt ist, wobei A¹¹ jeweils unabhängig voneinander aus Alkylgruppen mit 1 bis 8 Kohlenstoffatomen ausgewählt ist.

12. Zusammensetzung nach Anspruch 11, wobei die Verbindung E in einem Molverhältnis (Verbindung E)/(Co-Element, das von der Cobaltverbindung C bereitgestellt wird) zwischen 0,1 und 500, weiter bevorzugt zwischen 0,5 und 100, vorliegt.

## Claims

1. Process for hydrosilylation of an unsaturated compound A comprising at least one function chosen from an alkene function and an alkyne function, with a compound B comprising at least one hydrosilyl function, said process comprising the step consisting in bringing into contact said unsaturated compound A, said compound B, a cobalt compound C of formula (1):
[Co(N(SiR₃)₂)ₓ]_{y} (1)
wherein:
- the R symbols, which may be identical or different, represent a hydrogen atom or a hydrocarbon radical having from 1 to 12 carbon atoms,
- x = 1, 2 or 3, and
- y = 1 or 2;
a compound D of formula (2) below: 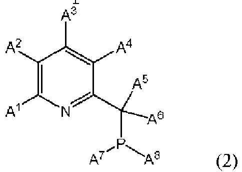 wherein:
- A¹, A², A³ and A⁴ are chosen, independently of one another, from a hydrogen atom, alkyl groups having from 1 to 8 carbon atoms, cycloalkyl groups having from 6 to 12 carbon atoms, aryl groups having from 6 to 12 carbon atoms, arylalkyl groups having from 7 to 24 carbon atoms, halogens and alkoxy groups of formula OA⁹ where A⁹ is an alkyl group having from 1 to 8 carbon atoms,
- A⁵ and A⁶ are chosen, independently of one another, from a hydrogen atom, alkyl groups having from 1 to 8 carbon atoms, cycloalkyl groups having from 6 to 12 carbon atoms, aryl groups having from 6 to 12 carbon atoms and arylalkyl groups having from 7 to 24 carbon atoms, and
- A⁷ and A⁸ are chosen, independently of one another, from alkyl groups having from 1 to 8 carbon atoms, cycloalkyl groups having from 6 to 12 carbon atoms, aryl groups having from 6 to 12 carbon atoms, arylalkyl groups having from 7 to 24 carbon atoms and alkoxy groups of formula OA¹⁰ where A¹⁰ is an alkyl group having from 1 to 8 carbon atoms,
and a compound E of formula (3) below:
R'-OH (3)
wherein R' represents a hydrogen atom or else R' is selected from the group consisting of alkyl groups having from 1 to 8 carbon atoms, cycloalkyl groups having from 6 to 12 carbon atoms, aryl groups having from 6 to 12 carbon atoms, arylalkyl groups having from 7 to 24 carbon atoms and silyl groups of formula Si (A¹¹)₃ where each A¹¹ is chosen, independently from one another, from alkyl groups having from 1 to 8 carbon atoms.

2. Process according to Claim 1, wherein the compound E is water.

3. Process according to Claim 1, wherein the compound E is an alcohol or a silanol of formula (3) below:
R'-OH (3)
wherein R' is selected from the group consisting of alkyl groups having from 1 to 8 carbon atoms, cycloalkyl groups having from 6 to 12 carbon atoms, aryl groups having from 6 to 12 carbon atoms, arylalkyl groups having from 7 to 24 carbon atoms and silyl groups of formula Si(A¹¹)₃ where each A¹¹ is chosen, independently from one another, from alkyl groups having from 1 to 8 carbon atoms.

4. Process according to any one of Claims 1 to 3, wherein the compound E is present in a (compound E)/(Co element provided by the cobalt compound C) molar ratio of between 0.1 and 500, more preferentially between 0.5 and 100.

5. Process according to any one of Claims 1 to 4, wherein the cobalt compound C is represented by the following formula:
[Co(N(Si(CH₃)₃)₂)₂]_{y}
wherein y is equal to 1 or 2.

6. Process according to any one of Claims 1 to 5, wherein the compound D is represented by the formula (2) below: 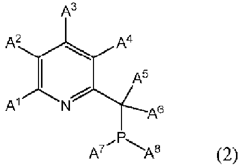 wherein:
- A¹, A², A³ and A⁴ are hydrogen atoms,
- A⁵ and A⁶ are hydrogen atoms,
- A⁷ and A⁸ are chosen from alkyl groups having from 1 to 8 carbon atoms, cycloalkyl groups having from 6 to 12 carbon atoms, aryl groups having from 6 to 12 carbon atoms, arylalkyl groups having from 7 to 24 carbon atoms and alkoxy groups of formula OA¹⁰ where A¹⁰ is an alkyl group having from 1 to 8 carbon atoms; and preferably A⁷ and A⁸ are chosen from t-butyl, isopropyl, methyl, ethyl, phenyl and cyclohexyl groups.

7. Process according to any one of Claims 1 to 6, wherein the unsaturated compound A is not an organopolysiloxane and is chosen from hydrocarbon compounds comprising from 2 to 40 carbon atoms, more preferentially from 2 to 12 carbon atoms, comprising one or more alkene or alkyne unsaturations that are not part of an aromatic ring, optionally substituted one or more times by a halogen atom, and wherein one or more carbon atoms may optionally be substituted by a heteroatom, typically an oxygen atom, a nitrogen atom or a silicon atom.

8. Process according to Claim 7, wherein the compound E is present in a (compound E)/(Co element provided by the cobalt compound C) molar ratio of between 0.1 and 100, preferably between 0.1 and 50, even more preferably between 0.5 and 15.

9. Process according to any one of Claims 1 to 6, wherein the unsaturated compound A is an organopolysiloxane compound comprising one or more alkene functions, preferably at least two alkene functions.

10. Process according to Claim 9, wherein the compound E is present in a (compound E)/(Co element provided by the cobalt compound C) molar ratio of between 0.5 and 300, preferably between 5 and 100.

11. Composition comprising:
- at least one unsaturated compound A comprising at least one function chosen from an alkene function and an alkyne function,
- at least one compound B comprising at least one hydrosilyl function,
- a cobalt compound C of formula (1):
[Co(N(SiR₃)₂)ₓ]_{y} (1)
wherein:
the R symbols, which may be identical or different, represent a hydrogen atom or a hydrocarbon radical having from 1 to 12 carbon atoms,
x = 1, 2 or 3, and
y = 1 or 2;
- a compound D of formula (2) below: 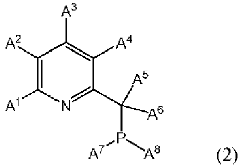 wherein:
A¹, A², A³ and A⁴ are chosen, independently of one another, from a hydrogen atom, alkyl groups having from 1 to 8 carbon atoms, cycloalkyl groups having from 6 to 12 carbon atoms, aryl groups having from 6 to 12 carbon atoms, arylalkyl groups having from 7 to 24 carbon atoms, halogens and alkoxy groups of formula OA⁹ where A⁹ is an alkyl group having from 1 to 8 carbon atoms,
A⁵ and A⁶ are chosen, independently of one another, from a hydrogen atom, alkyl groups having from 1 to 8 carbon atoms, cycloalkyl groups having from 6 to 12 carbon atoms, aryl groups having from 6 to 12 carbon atoms and arylalkyl groups having from 7 to 24 carbon atoms, and
A⁷ and A⁸ are chosen, independently of one another, from alkyl groups having from 1 to 8 carbon atoms, cycloalkyl groups having from 6 to 12 carbon atoms, aryl groups having from 6 to 12 carbon atoms, arylalkyl groups having from 7 to 24 carbon atoms and alkoxy groups of formula OA¹⁰ where A¹⁰ is an alkyl group having from 1 to 8 carbon atoms, and
- a compound E of formula (3) below:
R'-OH (3)
wherein R' represents a hydrogen atom or else R' is selected from the group consisting of alkyl groups having from 1 to 8 carbon atoms, cycloalkyl groups having from 6 to 12 carbon atoms, aryl groups having from 6 to 12 carbon atoms, arylalkyl groups having from 7 to 24 carbon atoms and silyl groups of formula Si(A¹¹)₃ where each A¹¹ is chosen, independently from one another, from alkyl groups having from 1 to 8 carbon atoms.

12. Composition according to Claim 11, wherein the compound E is present in a (compound E)/(Co element provided by the cobalt compound C) molar ratio of between 0.1 and 500, more preferentially between 0.5 and 100.
